# DEMANDE DE BREVET EUROPEEN

(11) **EP 4 102 701 A1**
(43) Date de publication de la demande: **14.12.2022**
(21) Numéro de dépôt: 22177244.5
(22) Date de dépôt: 03.06.2022
(51) Int. Cl.: H02M 1/00, H02M 7/48

(54) **CONVERTISSEUR DE PUISSANCE**

(30) Priorité: 09.06.2021 FR 2106069
(71) Demandeur: Commissariat à l'énergie atomique et aux énergies alternatives, 75015 Paris (FR)
(72) Inventeur: MASSAVIE, Vincent, 38054 GRENOBLE CEDEX 09 (FR); DESPESSE, Ghislain, 38054 GRENOBLE CEDEX 09 (FR); CARCOUET, Sébastien, 38054 GRENOBLE CEDEX 09 (FR); MAYNARD, Xavier, 38054 GRENOBLE CEDEX 09 (FR)
(74) Mandataire: Cabinet Beaumont

(57) **Abrégé**

La présente description concerne un convertisseur (400) de puissance comportant : un commutateur (114) comprenant des première (114d) et deuxième (114s) bornes de conduction destinées à recevoir une première tension (Vds) alternative, un premier circuit (402) de détection d'une valeur minimale atteinte par la première tension à chaque alternance, et de moyennage de valeurs minimales sur plusieurs alternances, et un deuxième circuit (404) de commande du commutateur configuré, en fonction de la moyenne desdites valeurs, pour fermer le commutateur lorsque la première tension est sensiblement nulle.

## Description

### Domaine technique

La présente description concerne de façon générale les dispositifs électroniques. La présente description concerne plus particulièrement les convertisseurs de puissance.

### Technique antérieure

Parmi les convertisseurs de puissance existants, on connaît par exemple des onduleurs permettant de convertir une tension d'entrée continue en une tension de sortie alternative. Les onduleurs existants présentent toutefois des dérives de fonctionnement liées notamment à des variations de conditions ambiantes et à des phénomènes de vieillissement.

### Résumé de l'invention

Il existe un besoin d'améliorer les convertisseurs de puissance connus.

Un mode de réalisation pallie tout ou partie des inconvénients des convertisseurs de puissance connus.

Un mode de réalisation prévoit un convertisseur de puissance comportant :
- un commutateur comprenant des première et deuxième bornes de conduction destinées à recevoir une première tension alternative ;
- un premier circuit de détection d'une valeur minimale atteinte par la première tension à chaque alternance, et de moyennage de valeurs minimales sur plusieurs alternances ; et
- un deuxième circuit de commande du commutateur configuré, en fonction de la moyenne desdites valeurs, pour fermer le commutateur lorsque la première tension est sensiblement nulle.

Selon un mode de réalisation, le premier circuit présente une constante de temps au moins cinq fois supérieure, de préférence au moins dix fois supérieure, à une période de la première tension.

Selon un mode de réalisation, le premier circuit comprend, entre un premier nœud relié, de préférence connecté, à la première borne de conduction du commutateur et un deuxième nœud d'application d'un potentiel de référence, un élément de redressement monoalternance en série avec une association en parallèle d'un élément capacitif et d'une résistance.

Selon un mode de réalisation, un troisième nœud, situé entre l'élément de redressement monoalternance et l'association en parallèle de l'élément capacitif et de la résistance, présente un potentiel fonction d'une enveloppe inférieure de la première tension.

Selon un mode de réalisation, l'élément de redressement monoalternance est une diode.

Selon un mode de réalisation, le premier circuit comprend en outre une source de tension reliée, de préférence connectée, entre l'association en parallèle de l'élément capacitif et de la résistance et le deuxième nœud.

Selon un mode de réalisation, le deuxième circuit est en outre configuré pour modifier un rapport cyclique du commutateur en fonction de la moyenne desdites valeurs.

Selon un mode de réalisation, le commutateur est un transistor à effet de champ, les première et deuxième bornes correspondant respectivement à des bornes de drain et de source du transistor.

Selon un mode de réalisation, le commutateur présente une fréquence de commutation comprise entre 0,1 MHz et 100 MHz, de préférence comprise entre 1 et 10 MHz, plus préférentiellement égale à environ 1,5 MHz.

Selon un mode de réalisation, le convertisseur comporte en outre un résonateur piézoélectrique adapté à fournir la première tension.

Selon un mode de réalisation, le deuxième circuit comprend :
- un comparateur de la moyenne desdites valeurs à un seuil ;
- un correcteur ; et
- un circuit de modulation de largeur d'impulsion.

Selon un mode de réalisation, le seuil est fonction d'une consommation énergétique d'une charge alimentée par le convertisseur.

Un mode de réalisation prévoit un procédé de commande d'un convertisseur de puissance tel que décrit, comprenant les étapes suivantes :
a) moyenner les valeurs minimales de la première tension alternative après plusieurs alternances ; et
b) ajuster un instant de fermeture du commutateur en fonction de la moyenne desdites valeurs.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique et partielle, un exemple de convertisseur de puissance ;
la figure 2 est un graphique d'un exemple d'évolution d'une tension aux bornes d'un commutateur du convertisseur de la figure 1 ;
la figure 3 est un graphique d'un autre exemple d'évolution de la tension aux bornes du commutateur du convertisseur de la figure 1 ;
la figure 4 représente, de façon schématique et partielle, un convertisseur de puissance selon un premier mode de réalisation ;
la figure 5 représente, de façon schématique et partielle, une variante du convertisseur de la figure 4 ;
la figure 6 représente, de façon schématique et partielle, une variante d'un circuit du convertisseur de la figure 4 ;
la figure 7 représente, de façon schématique et partielle, une autre variante d'un circuit du convertisseur de la figure 4 ;
la figure 8 représente, de façon schématique et partielle, une partie d'un convertisseur de puissance selon un deuxième mode de réalisation ;
la figure 9 représente, de façon schématique et partielle, une variante de la partie du convertisseur de la figure 8 ;
la figure 10 est un graphique de variation d'un potentiel du convertisseur de la figure 4 en fonction d'un rapport cyclique d'un commutateur ; et
la figure 11 est un graphique de variation d'un rendement des convertisseurs des figures 1 et 4 en fonction d'une inductance d'un élément inductif de ces convertisseurs.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les applications utilisant les convertisseurs de puissance ne sont pas détaillées, les modes de réalisation décrits étant compatibles avec les applications usuelles mettant en œuvre des convertisseurs de puissance.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

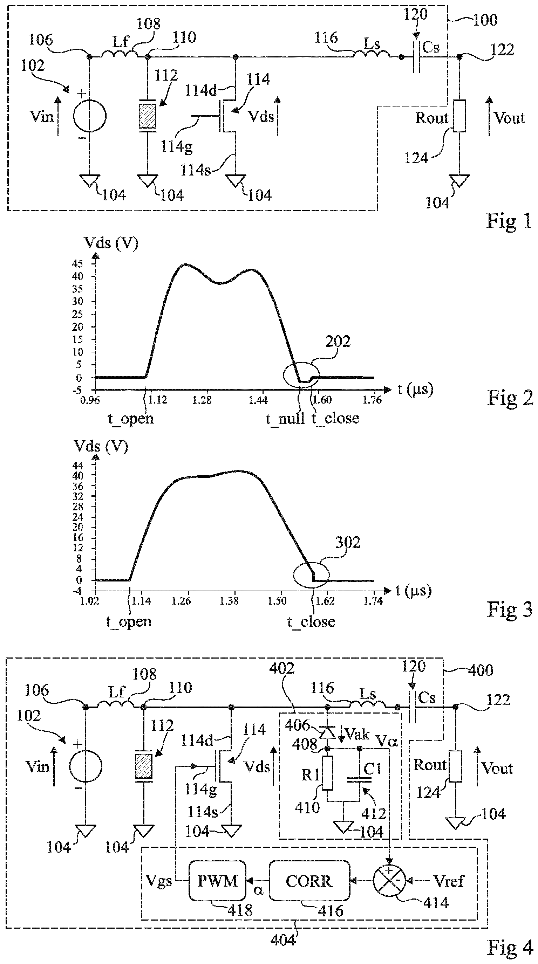

La figure 1 représente, de façon schématique et partielle, un exemple de convertisseur 100 de puissance. Le convertisseur 100 illustré en figure 1 est plus précisément un onduleur de type « L-piézo ».

Dans l'exemple représenté, le convertisseur 100 comporte une source 102 de fourniture d'une tension Vin continue. La source 102 comporte une borne (-) négative reliée, de préférence connectée, à un nœud 104, ou un rail, d'application d'un potentiel de référence, par exemple la masse. La source 102 comporte en outre une autre borne (+) positive reliée, de préférence connectée, à un autre nœud 106.

Un premier élément 108 inductif d'inductance Lf, par exemple une bobine, relie, de préférence connecte, le nœud 106 à encore un autre nœud 110 du convertisseur 100.

Dans l'exemple représenté, le convertisseur 100 comporte un élément 112 (typiquement un résonateur) piézoélectrique reliant, de préférence connectant, les nœuds 110 et 104.

Un commutateur 114 relie, de préférence connecte, les nœuds 110 et 104. Le commutateur 114 est par exemple un transistor de puissance à effet de champ (« Field-Effect Transistor » - FET, en anglais), par exemple un transistor MOS (métal-oxyde-semiconducteur ou « Metal-Oxide-Semiconductor », en anglais). Le commutateur 114 est de préférence un transistor MOS à canal N, ou transistor NMOS.

En variante, le commutateur est un transistor à haute mobilité électronique (« High-Electron Mobility Transistor » - HEMT, en anglais). Dans ce cas, le transistor 114 est, de préférence, un transistor HEMT à base de nitrure de gallium (GaN).

Le commutateur 114 comporte une première borne 114d de conduction (drain) reliée, de préférence connectée, au nœud 110 et une autre borne 114s de conduction (source) reliée, de préférence connectée, au nœud 104. Le commutateur 114 comporte en outre une troisième borne 114g de commande (grille).

À titre d'exemple, le commutateur 114 du convertisseur 100 présente une fréquence de commutation (fixée par un circuit de commande non représenté) comprise entre 0,1 MHz et 100 MHz, de préférence comprise entre 1 et 10 MHz, plus préférentiellement égale à environ 1,5 MHz.

Les commutations périodiques du commutateur 114 entraînent la production, par l'élément 112 piézoélectrique, d'un signal oscillant, par exemple un signal périodique sinusoïdal. Dans l'exemple représenté, une tension Vds alternative est présente entre les bornes 114d de drain et 114s de source du transistor 114.

Dans le cas d'un transistor NMOS, le transistor 114 est dans un état passant lorsqu'une tension Vgs supérieure ou égale à une tension Vth1 de seuil est appliquée entre sa borne 114g de grille et sa borne 114s de source et dans un état bloqué lorsque la tension Vgs est strictement inférieure à la tension Vth1 de seuil.

Dans l'exemple représenté, le convertisseur 100 de puissance comporte en outre un deuxième élément 116 inductif d'inductance Ls, par exemple une bobine, en série avec un élément capacitif 120 de capacité Cs, par exemple un condensateur, entre la borne 110 et une borne de sortie 122 du convertisseur.

Une charge, par exemple résistive, symbolisée en figure 1 par une résistance 124 de valeur Rout, est destinée à être reliée, de préférence connectée, entre la borne de sortie 122 et le nœud 104 d'application du potentiel de référence.

En fonctionnement, la source 102 applique la tension continue Vin entre les nœuds 106 et 104 du convertisseur 100. Le transistor 114 applique, entre les nœuds 110 et 104, la tension alternative Vds ce qui a pour effet de faire osciller l'élément 112 piézoélectrique. La tension alternative Vds est filtrée par cet élément 112, par le deuxième élément 116 inductif et par l'élément 120 capacitif, avant d'être appliquée aux bornes de la charge 124. Typiquement, le filtre LC formé par les éléments 116 et 120 permet de faire en sorte que la tension Vout générée entre les nœuds 122 et 104 soit une tension sinusoïdale correspondant à la tension Vds dont seule une composante fondamentale est conservée.

Plus précisément, le transistor 114 est typiquement commandé en modulation de largeur d'impulsion (« Pulse Width Modulation » - PWM, en anglais) de sorte à produire la tension alternative Vds qui est filtrée notamment par l'élément 112 piézoélectrique afin d'obtenir la tension Vds souhaitée. La fréquence de commutation du transistor 114 est sensiblement constante et égale à la moitié de la fréquence d'oscillation du résonateur piézoélectrique 112. Après chaque commutation depuis l'état ouvert vers l'état fermé, le transistor 114 est maintenu d'autant plus longtemps à l'état fermé que la puissance demandée par la charge 124 est importante. À l'inverse, le commutateur 114 est par exemple maintenu d'autant moins longtemps à l'état fermé que la puissance demandée par la charge 124 est faible.

La figure 2 est un graphique d'un exemple d'évolution, en fonction du temps t, de la tension Vds aux bornes du transistor 114 du convertisseur 100 de la figure 1. La figure 2 illustre plus précisément un exemple d'allure d'une alternance positive de la tension Vds.

Dans l'exemple représenté, le transistor 114 est fermé à un instant t_close puis ouvert à un instant t_open. À partir de l'instant t_open, une tension apparaît entre les première et deuxième bornes 114d, 114s de conduction du transistor 114. Peu avant l'instant t_close de fermeture du transistor 114 (encadré 202), la tension Vds devient négative. Cela provoque la circulation d'un faible courant dans une diode inverse du transistor 114. À l'instant t_close, la tension Vds s'annule et la circulation du courant entre les première et deuxième bornes 114d, 114s de conduction du transistor 114 est alors interrompue.

L'instant t_close correspond approximativement à un instant où la tension Vgs appliquée entre les bornes 114g de grille et 114s de source du transistor 114 devient supérieure ou égale à la tension Vth1 de seuil de ce transistor. À l'instant t_close, le transistor 114 devient alors sensiblement passant. L'instant t_open correspond approximativement à un instant où la tension Vgs devient strictement inférieure à la tension Vth1 de seuil. À l'instant t_open, le transistor 114 devient alors sensiblement bloqué.

À un instant t_null, antérieur à l'instant t_close de fermeture du transistor 114 (encadré 202) et proche de l'instant t_close, la tension Vds entre les nœuds 110 et 104 du convertisseur 100 est sensiblement nulle. À l'instant t_close, la tension Vds est par exemple comprise entre -0,1 et -2 V. Dans l'exemple illustré en figure 2, la tension Vds est plus précisément égale à environ -2 V à l'instant t_close.

L'exemple représenté en figure 2, dans lequel le transistor 114 est fermé lorsque la tension Vds est négative et proche de 0 V, correspond à un cas dit de commutation à tension quasiment nulle, ou « quasi ZVS » (de l'anglais « Zero Volt Switching » - ZVS). Dans ce cas, la commutation entraîne peu de perturbations du convertisseur 100 et engendre de faibles pertes énergétiques au niveau du transistor 114.

La figure 3 est un graphique d'un autre exemple d'évolution de la tension Vds aux bornes du transistor 114 du convertisseur 100 de la figure 1. La figure 3 illustre plus précisément un exemple d'allure d'une autre alternance positive de la tension Vds alternative.

Dans l'exemple représenté, au voisinage de l'instant t_close de fermeture du transistor 114 (encadré 302), la tension Vds entre les nœuds 110 et 104 du convertisseur 100 est positive. À l'instant t_close, la tension Vds est par exemple comprise entre 0,5 et 5 V. Dans l'exemple illustré en figure 3, la tension Vds est plus précisément égale à environ 4 V à l'instant t_close.

L'exemple représenté en figure 3, dans lequel le transistor 114 est fermé lorsque la tension Vds est positive et par exemple égale à plusieurs volts, correspond à un cas dit de commutation dure (« hard switching », en anglais), ou commutation brutale. Dans ce cas, la commutation entraîne de fortes perturbations du convertisseur 100 et engendre des pertes énergétiques importantes au niveau du transistor 114. Plus précisément, dans l'exemple illustré en figure 3, la commutation brutale provoque juste après l'instant t_close une variation dVds/dt très rapide de la tension Vds aux bornes du transistor 114. Cela se traduit par un fort pic de courant dans le transistor 114, pouvant conduire à un endommagement irréversible de ce transistor.

En conséquence, on cherche généralement à éviter des commutations brutales du type de celle illustrée en figure 3 et on privilégie plutôt des commutations de type quasi ZVS, comme exposé ci-dessus en relation avec la figure 2. Dans ce but, le convertisseur 100 est initialement réglé de sorte que la commutation à l'instant t_close s'effectue en quasi ZVS en ajustant des paramètres de commande du transistor 114. En raison notamment de variations de la puissance consommée par la charge 124 et d'évolutions de caractéristiques physiques d'éléments du convertisseur 100 (par exemple des fluctuations de valeur de l'inductance Lf et de fréquence de résonance du résonateur piézoélectrique 112), il s'avère toutefois difficile de maintenir un fonctionnement de ce type.

Typiquement, des tolérances de fabrication des éléments du convertisseur 100, des variations de température ambiante, un phénomène de vieillissement des éléments, etc. entraînent peu à peu une dérive de fonctionnement conduisant à une perte de la commutation en quasi ZVS.

Pour pallier ce problème, on aurait pu prévoir un circuit de détection de perturbations impulsionnelles, par exemple un circuit de détection de pente de tension analogue au circuit exposé dans la publication de S. Li, W. Shu et S. Lu intitulée « Voltage slope-based zero voltage switching detection method for wireless power transfer systems » (Electron. Lett., vol. 54, n° 12, p. 775-777, 2018). Toutefois, un tel circuit ne serait pas adaptable à un convertisseur du type du convertisseur 100 de la figure 1 comportant un seul commutateur 114. En outre, le circuit décrit dans la publication susmentionnée nécessite l'utilisation d'éléments ou composants actifs destinés à réinitialiser une information de détection à chaque période. Cela entraîne une consommation électrique supplémentaire, réduisant d'autant le rendement énergétique du convertisseur.

On aurait aussi pu prévoir un circuit de détection par prise de tension de source, par exemple analogue au circuit décrit dans la demande de brevet américain US 5166549. Un tel circuit tire par exemple profit d'une résistance associée en série avec un commutateur de puissance afin de détecter une commutation au voisinage du zéro de tension de ce commutateur. Cela requiert toutefois l'ajout d'un élément, en l'espèce une résistance, à l'intérieur de la boucle de puissance du convertisseur. Cette résistance engendre désavantageusement une augmentation de pertes énergétiques du convertisseur, donc nuit à son rendement.

La figure 4 représente, de façon schématique et partielle, un convertisseur 400 de puissance selon un mode de réalisation. Le convertisseur 400 de la figure 4 comprend des éléments communs avec le convertisseur 100 de la figure 1. Ces éléments communs ne seront pas décrits à nouveau ci-après.

Le convertisseur 400 de la figure 4 diffère du convertisseur 100 de la figure 1 principalement en ce que le convertisseur 400 comporte en outre un premier circuit 402 de détection et un deuxième circuit 404 de commande.

Selon un mode de réalisation, le premier circuit 402 est un circuit de détection d'une valeur minimale atteinte par la tension alternative Vds à chaque alternance et de moyennage de cette valeur minimale sur plusieurs alternances de cette tension.

Dans l'exemple représenté, le circuit 402 comporte un élément 406 de redressement monoalternance. L'élément 406 de redressement monoalternance est par exemple, comme illustré en figure 4, une diode dont une anode est reliée, de préférence connectée, à un nœud 408 du circuit 402 et dont une cathode est reliée, de préférence connectée, au nœud 110 du convertisseur 400. La diode 406 est passante lorsque la tension Vak entre son anode et sa cathode est supérieure ou égale à une tension Vth2 de seuil de cette diode et est, sinon, bloquée. Pour simplifier, on suppose que la diode 406 n'est jamais soumise à une tension de polarisation inverse suffisamment importante pour la faire entrer en régime d'avalanche. À titre d'exemple, la tension Vth2 de seuil de la diode 406 est comprise entre 0,2 et 0,7 V, par exemple égale à environ 0,6 V pour une diode en silicium.

Dans la suite de la description, on note Vα le potentiel présent au nœud 408.

Dans l'exemple représenté, le circuit 402 comporte en outre une résistance 410, de valeur R1, associée en parallèle avec un autre élément 412 capacitif, par exemple un condensateur de capacité C1. La résistance 410 comporte une borne reliée, de préférence connectée, au nœud 408 et une autre borne reliée, de préférence connectée, au nœud 104 d'application du potentiel de référence. De façon analogue, l'élément 412 capacitif comporte une borne reliée, de préférence connectée, au nœud 408 et une autre borne reliée, de préférence connectée, au nœud 104. La résistance 410 peut être réalisée sous la forme d'un transistor MOS polarisé en source de courant.

Le rôle de la cellule RC 410-412 est de moyenner, sur plusieurs alternances de la tension Vds, la valeur minimale atteinte par celle-ci.

Le rôle de la diode 406 est de laisser passer un courant électrique entre les nœuds 110 et 408 lorsque la tension Vds est inférieure ou égale au potentiel Vα moins une chute de tension aux bornes de cette diode. Cela entraîne alors une baisse de tension aux bornes du condensateur 412. En revanche, la diode 406 empêche toute circulation de courant entre les nœuds 110 et 408 lorsque la tension Vds est supérieure au potentiel Vα plus la chute de tension aux bornes de cette diode.

Pendant une alternance de la tension Vds, la tension Vds croît par exemple à partir de l'instant t_open d'ouverture du transistor 114, puis décroît au voisinage de l'instant t_close de fermeture de ce transistor. On suppose, comme exposé précédemment en relation avec la figure 2, que la tension Vds est négative à l'instant t_close. Si la tension Vds présente en outre une valeur suffisamment faible pour que la tension Vak aux bornes de la diode 406 soit supérieure ou égale à sa tension Vth2 de seuil, la diode 406 est alors passante. Cela tend à charger le nœud 408, donc à faire diminuer le potentiel Vα présent à ce nœud. Cette diminution est d'autant plus rapide que la tension Vds est faible. Ainsi, plus la tension Vds présente une valeur négative importante et plus le potentiel Vα est élevé.

Fonctionnellement, le premier circuit 402 du convertisseur 400 agit comme un détecteur d'enveloppe inférieure de la tension Vds.

Lors d'une alternance suivante de la tension Vds, l'augmentation de la tension Vds à partir de l'instant t_open d'ouverture du transistor 114 provoque un blocage de la diode 406. Le nœud 408 se retrouve alors isolé du nœud 110. Cela entraîne ainsi une décharge du nœud 408 vers le nœud 104 d'application du potentiel de référence, donc une baisse du potentiel Vα. Cette baisse du potentiel Vα est toutefois amortie ou filtrée, sur des alternances successives de la tension Vds, par l'association en parallèle de la résistance 410 et du condensateur 412.

La résistance R1 et la capacité C1 sont par exemple telles que le premier circuit 402 présente une constante τ de temps, égale dans cet exemple au produit de la résistance R1 par la capacité C1 (τ = R1*C1), au moins cinq fois supérieure, de préférence au moins dix fois supérieure, à une période de la tension Vds alternative. Cela permet ainsi de moyenner, ou lisser, des valeurs prises par le potentiel Vα sur plusieurs alternances de la tension Vds. Le potentiel Vα est par exemple appliqué sur une entrée du deuxième circuit 404. À titre d'exemple, si la fréquence de commutation du transistor 114 est environ égale à 10 MHz, la constante τ de temps est de l'ordre de la microseconde.

Selon un mode de réalisation, le deuxième circuit 404 est un circuit de commande du transistor 114 configuré, en fonction de la moyenne des valeurs du potentiel Vα, pour commander la fermeture du transistor 114 lorsque la tension Vds est sensiblement nulle. Le circuit 404 permet de faire en sorte que l'instant t_close de fermeture du transistor 114 intervienne lorsque la tension Vds est, par exemple, comprise entre 0 et -1 V.

De manière générale, la moyenne des valeurs du potentiel Vα permet d'estimer si le convertisseur 400 est dans le mode de fonctionnement quasi ZVS, que l'on cherche à maintenir, ou s'il se rapproche du mode de fonctionnement à commutation brutale, que l'on souhaite éviter. Le deuxième circuit 404 est configuré pour maintenir le convertisseur 400 dans le mode de fonctionnement quasi ZVS, dans lequel la commutation (instant t_close) s'effectue lorsque la tension Vds est négative et proche du zéro de tension, malgré les dérives et le vieillissement des composants du convertisseur.

Dans l'exemple représenté, le circuit 404 comporte un comparateur 414. Le comparateur 414 comporte par exemple une entrée (+) reliée, de préférence connectée, au nœud 408 du circuit 402 et recevant le potentiel Vα. Le comparateur 414 comporte par exemple une autre entrée (-) de comparaison à un seuil, l'autre entrée recevant par exemple un potentiel Vref de référence. Cette autre entrée du comparateur est par exemple reliée à un nœud non représenté d'application du potentiel Vref de référence. Le potentiel Vref de référence est ajusté de sorte à obtenir un fonctionnement quasi ZVS. Dans l'exemple représenté, la valeur du potentiel Vref est égale à environ 0,1 V.

Dans l'exemple représenté, une sortie du comparateur 414 est connectée à une entrée d'un correcteur 416 (CORR). La sortie du comparateur transmet par exemple à l'entrée du correcteur 416 un signal image d'un écart du potentiel Vα par rapport au signal Vref de référence. À titre d'exemple, le correcteur 416 est un régulateur proportionnel intégral (PI). Le correcteur 416 permet par exemple d'obtenir une boucle de régulation plus stable que si le circuit 404 était dépourvu de correcteur.

Dans cet exemple, le correcteur 416 fournit en sortie un signal α. Le signal α correspond par exemple à une tension continue image d'un rapport cyclique à appliquer sur le transistor après la modulation de largeur d'impulsion. Pour simplifier, on désignera le signal α par le terme « rapport cyclique » dans la suite de la description.

Dans l'exemple représenté, le signal α en sortie du correcteur 416 est transmis à une entrée d'un circuit 418 (PWM) de modulation de largeur d'impulsion. Le circuit 418 est par exemple adapté à ajuster les instants t_close de fermeture et t_open d'ouverture du transistor 114 en fonction du signal α. Plus précisément, dans l'exemple représenté, la sortie du circuit 418 est connectée à la grille 114g du transistor 114 et fournit le signal Vgs à la grille 114g.

De manière générale, les premier et deuxième circuits 402, 404 permettent d'estimer, d'après la moyenne des valeurs du potentiel Vα, un écart de fonctionnement du convertisseur 400 par rapport à un fonctionnement dans lequel le transistor 114 est ouvert lorsque la tension Vds est négative et voisine de 0 V (fonctionnement « quasi ZVS »). Les circuits 402 et 404 permettent en outre d'ajuster le rapport cyclique α en fonction de cet écart pour maintenir le fonctionnement quasi ZVS du convertisseur 400.

Un avantage du convertisseur 400 tient au fait qu'il est capable de compenser des dérives, par exemple des variations d'inductance Lf de la bobine 108 et des fluctuations de fréquence de résonance du résonateur 112 au cours du temps. Cela permet notamment au convertisseur 400 de présenter un rendement énergétique supérieur au convertisseur 100 de la figure 1, ainsi qu'une durée de vie accrue.

Un autre avantage du convertisseur 400 réside dans le fait que le circuit 404 de régulation du rapport cyclique α du transistor 114 permet des modifications de puissance de sortie de ce convertisseur tout en maintenant les commutations du transistor 114 vers l'état ouvert lorsque la tension Vds est négative et proche de zéro. À titre d'exemple, pour une fréquence de 1,4 MHz sous 20 V, le convertisseur 400 est capable de maintenir un fonctionnement quasi ZVS sur une gamme de puissances comprise entre 0 et 24 W, contre 9 à 21 W pour l'onduleur 100 de la figure 1.

Encore un autre avantage du convertisseur 400 tient au fait qu'il ne présente pas de dissipation d'énergie au niveau du circuit de puissance. En outre, le convertisseur 400 ne subit pas de dégradation de commande du transistor MOS 114.

À titre de variante, la diode 406 et l'association en parallèle de la résistance 410 et du condensateur 412 peuvent être interverties. Dans ce cas, la diode 406 a plus précisément son anode reliée, de préférence connectée, au nœud 104 d'application du potentiel de référence et sa cathode reliée, de préférence connectée, au nœud 408. La résistance 410 et le condensateur 412 ont alors chacun une borne reliée, de préférence connectée, au nœud 408 et une autre borne reliée, de préférence connectée, au nœud 110.

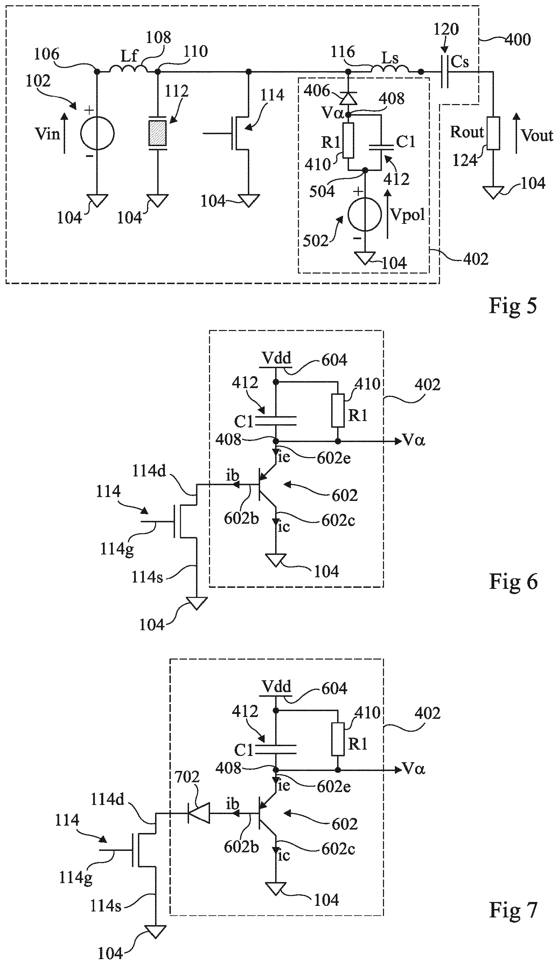

La figure 5 représente, de façon schématique et partielle, une variante du convertisseur 400 de la figure 4. Le circuit 404 du convertisseur 400 n'a pas été représenté en figure 5 afin de ne pas surcharger la figure.

La variante illustrée en figure 5 diffère du mode de réalisation illustré en figure 4 principalement en ce que, dans cette variante, le premier circuit 402 du convertisseur 400 comporte en outre une source 502 de tension Vpol continue et sensiblement constante. La source 502 est par exemple reliée, de préférence connectée, entre le nœud 104 d'application du potentiel de référence et l'association en parallèle de la résistance 410 et du condensateur 412. La source 502 comporte plus précisément une borne (-) négative reliée, de préférence connectée, au nœud 104 et une autre borne (+) positive reliée, de préférence connectée, à un nœud 504 du circuit 402.

La tension Vpol de polarisation est approximativement égale à la tension Vth2 de seuil de la diode 406. On tire ainsi profit de la source 502 pour compenser la tension Vth2 de seuil de la diode 406. Cela permet de relier encore plus facilement le potentiel Vα à l'enveloppe inférieure de la tension Vds alternative pour estimer si le convertisseur 400 se trouve dans le mode de fonctionnement en quasi ZVS ou s'il s'en éloigne.

La figure 6 représente, de façon schématique et partielle, une variante du circuit 402 du convertisseur 400 de la figure 4.

Dans cette variante, la diode 406 du circuit 402 est remplacée par un transistor 602 bipolaire, de type PNP. Le transistor 602 est par exemple connecté de sorte à obtenir une fonction analogue à celle de la diode 406. Plus précisément, dans l'exemple représenté, le transistor 602 comporte une première borne 602c de conduction (collecteur) reliée, de préférence connectée, au nœud 104 d'application du potentiel de référence, une deuxième borne 602e de conduction (émetteur) reliée, de préférence connectée, au nœud 408 et une troisième borne 602b de commande (base) reliée, de préférence connectée, à la borne 114d de drain du transistor 114.

En outre, dans cette variante, l'association en parallèle de la résistance 410 et du condensateur 412 n'est pas connectée entre le nœud 408 et le nœud 104 mais entre le nœud 408 et un autre nœud 604, ou un rail, d'application d'un potentiel Vdd d'alimentation du circuit 402. À titre d'exemple, le potentiel Vdd est sensiblement constant et compris entre 2 et 5 V, par exemple égal à environ 3 V.

Le gain du transistor 602 est choisi pour être d'au moins 50, de sorte que le courant de collecteur ic est très supérieur (dans un rapport d'au moins 50) au courant de base ib tiré par le transistor 114 lorsque ce dernier est passant (la somme des courants de base et de collecteur étant, pour un transistor de type PNP, égal au courant d'émetteur prélevé sur le nœud 408).

Le rôle du transistor 602 est d'éviter que les charges/décharges du condensateur 412 ne perturbent le fonctionnement du transistor 114.

La variante du circuit 402 exposée en relation avec la figure 6 présente un fonctionnement analogue à celui du circuit 402 de la figure 4. La variante de la figure 6 permet néanmoins que la capacité C1 du condensateur 412 soit plus élevée que dans le cas du mode de réalisation de la figure 4, ce qui permet de réduire des dérives de tension liées à des courants de fuite.

La figure 7 représente, de façon schématique et partielle, une autre variante du circuit 402 du convertisseur 400 de la figure 4.

La variante du circuit 402 illustrée en figure 7 diffère de la variante du circuit 402 illustrée en figure 6 en ce que le circuit 402 comporte en outre un autre élément 702 de redressement monoalternance. L'élément 702 de redressement monoalternance est par exemple une diode ou une diode Zener dont une anode est reliée, de préférence connectée, à la borne 602b de base du transistor 602 bipolaire et dont une cathode est reliée, de préférence connectée, à la borne 114d de drain du transistor 114 de puissance.

La diode 702 permet avantageusement d'éviter que le transistor 602 soit contraint de supporter, entre ses bornes 602b et 602e, une tension Vbe inverse importante lorsque le transistor 114 est ouvert. Un autre avantage de cette variante tient au fait que la diode 702 permet d'augmenter le potentiel Vα et de faire en sorte que ce potentiel soit compris dans une plage de tensions plus élevée que pour la variante de la figure 6. À titre d'exemple, le potentiel Vα est dans ce cas compris entre 0 V et Vdd. On évite ainsi que le potentiel Vα soit négatif, ce qui facilite la régulation par le deuxième circuit 404.

Bien que cela n'ait pas été représenté en figures 6 et 7, le potentiel Vα est par exemple transmis au deuxième circuit 404 afin d'adapter la commande du transistor 114 comme exposé précédemment en relation avec la figure 4.

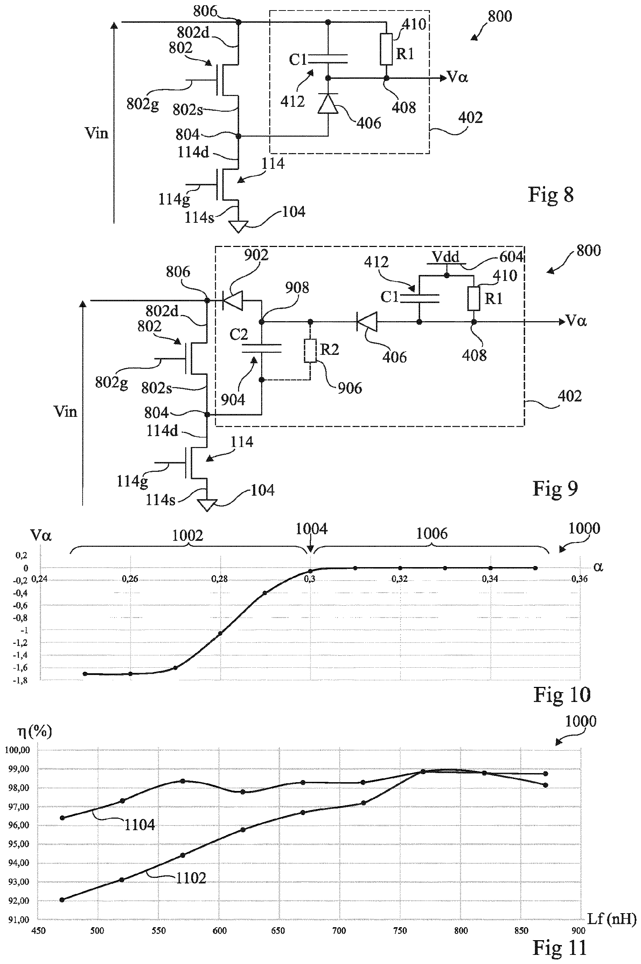

La figure 8 représente, de façon schématique et partielle, une partie d'un convertisseur 800 de puissance selon un mode de réalisation.

Le convertisseur 800 de la figure 8 comprend des éléments communs avec le convertisseur 400 de la figure 4. Ces éléments communs ne seront pas décrits à nouveau ci-après.

Le convertisseur 800 de la figure 8 diffère du convertisseur 400 de la figure 4 principalement en ce que le convertisseur 800 comporte, outre le commutateur 114, un autre commutateur 802. Le commutateur 802 est par exemple un transistor MOS, analogue au commutateur 114.

La borne 114s du transistor 114 est reliée, de préférence connectée, au nœud 104 et la borne 114d du transistor 114 est reliée, de préférence connectée, à un nœud 804 du convertisseur 800.

Le transistor 802 présente une première borne 802s de conduction (source) reliée, de préférence connectée, au nœud 804 et une deuxième borne 802d de conduction (drain) reliée, de préférence connectée, à un autre nœud 806 du convertisseur 800. Le potentiel Vin est présent entre les nœuds 806 et 104.

La diode 406 a sa borne d'anode reliée, de préférence connectée, au nœud 804 et sa borne de cathode reliée, de préférence connectée, au nœud 408. L'association en parallèle de la résistance 410 et du condensateur 412 est reliée, de préférence connectée, entre les nœuds 408 et 806.

Dans l'exemple représenté, l'association en série des transistors 802 et 114 entre les nœuds 806 et 104 fait partie d'un bras de pont du convertisseur 800.

Le potentiel Vα présent au nœud 408 est fonction d'un potentiel crête présent sur la borne 802s de source du transistor 802. Bien que cela n'ait pas été représenté en figure 8, le convertisseur 800 comporte de préférence un circuit ou boucle de régulation analogue au circuit 404 exposé en relation avec la figure 4. Le circuit de régulation du convertisseur 800 permet alors de maintenir le potentiel crête présent sur la borne 802s entre la tension Vin et une tension égale à Vin plus une tension inverse du transistor 802, correspondant à une tension de conduction d'une diode inverse de ce transistor. La tension crête est supérieure et sensiblement égale à la tension Vin.

À titre de variante, une source de polarisation peut être interposée entre le nœud 806 du convertisseur 800 et l'association en parallèle de la résistance 410 et du condensateur 412. Cette source de tension procure des avantages analogues à ceux exposés en relation avec la figure 5 pour la source 502 de tension Vpol.

La figure 9 représente, de façon schématique et partielle, une variante de la partie du convertisseur 800 de la figure 8.

La variante illustrée en figure 9 diffère du mode de réalisation illustré en figure 8 principalement en ce que le premier circuit 402 du convertisseur 800 comporte en outre un autre élément 902 de redressement monoalternance, un autre élément 904 capacitif et, de façon optionnelle, une autre résistance 906.

L'élément 902 de redressement monoalternance est une diode dont une anode est reliée, de préférence connectée, à un nœud 908 du convertisseur 800 et dont une cathode est reliée, de préférence connectée, au nœud 806. La diode 902 est par exemple analogue à la diode 406.

L'élément 904 capacitif comporte une borne reliée, de préférence connectée, au nœud 908 et une autre borne reliée, de préférence connectée, au nœud 804. L'élément 904 capacitif, de capacité C2, est par exemple un condensateur analogue au condensateur 412.

La résistance optionnelle 906, de valeur R2, est associée en parallèle avec l'élément 904 capacitif. La résistance 906 comporte une borne reliée, de préférence connectée, au nœud 908 et une autre borne reliée, de préférence connectée, au nœud 804.

En outre, l'anode de la diode 406 est reliée, de préférence connectée, au nœud 408 et la cathode de la diode 406 est reliée, de préférence connectée, au nœud 908. Dans cet exemple, l'association en parallèle de la résistance 410 et de la capacité 412 est reliée, de préférence connectée, entre les nœuds 408 et 604.

Par ailleurs, le condensateur 412 est connecté entre le nœud 408 et le nœud 604. En variante, le condensateur 412 est connecté entre le nœud 408 et un autre nœud d'application d'un potentiel fixe, par exemple le nœud 104 d'application du potentiel de référence.

La variante du convertisseur 800 illustrée en figure 9 permet avantageusement de faire en sorte que le potentiel Vα évolue dans une plage de tensions plus élevée que pour le convertisseur 800 de la figure 8. Le potentiel Vα est dans ce cas compris par exemple entre 0 V et Vdd.

En fonctionnement, lorsque le transistor 114 est fermé et lorsque le transistor 802 est ouvert, le nœud 804 est porté à un potentiel sensiblement égal à celui du nœud 104. La résistance 410 en parallèle avec la capacité 412 forme un filtre permettant, après plusieurs alternances, de mémoriser au nœud 408 une valeur minimale d'une différence de potentiel entre les nœuds 604 et 408 (aux chutes de tension près dans la diode 406). Si la capacité C2 du condensateur 904 est très supérieure, par exemple entre dix et cent fois supérieure, à la capacité C1 du condensateur 412, un transfert de charge entre les condensateurs 904 et 412 aura peu d'influence sur une différence de potentiel aux bornes du condensateur 904. Dans ce cas, le potentiel Vα se stabilisera rapidement, c'est-à-dire au bout de quelques alternances seulement (moins de 10 alternances).

En revanche, si la capacité C2 du condensateur 904 est très inférieure, par exemple entre dix et cent fois inférieure, à la capacité C1 du condensateur 412, un transfert de charge entre les condensateurs 904 et 412 aura beaucoup d'influence sur la différence de potentiel aux bornes du condensateur 904. Dans ce cas, le potentiel Vα se stabilisera lentement, c'est-à-dire au bout d'un grand nombre d'alternances (au moins 10 alternances).

Lorsque le transistor 114 est commuté à l'état ouvert et que le transistor 802 n'est pas encore commuté à l'état fermé, la borne 802s de source du transistor 802 présente un potentiel qui augmente, par exemple du fait d'une résonance LC. Ce potentiel peut par exemple dépasser la tension Vin. Dans ce cas, la capacité 904 mémorise la valeur crête du potentiel présent sur la borne 802s de source du transistor 802 par rapport au potentiel Vin, aux chutes de tension près dans la diode 902.

Dans un cas où la résistance optionnelle 906 est présente, cette résistance permet de filtrer la tension aux bornes du condensateur 904 lorsque le transistor 114 se ferme. On élimine ou on réduit ainsi avantageusement des perturbations haute fréquence provoquées par la fermeture du transistor 114.

À titre de variante, chaque diode 406, 902 peut être remplacée par une diode Zener. Cela permet notamment d'ajuster la plage dans laquelle évolue le potentiel Vα.

La figure 10 est un graphique 1000 de variation du potentiel Vα présent au nœud 408 du convertisseur 400 de la figure 4 en fonction du rapport cyclique α.

Dans l'exemple représenté, le graphique 1000 comporte une première région 1002 dans laquelle le rapport cyclique α est compris entre environ 0,25 et environ 0,30. La première région 1002 correspond au mode de fonctionnement en quasi ZVS, dans lequel le convertisseur 400 est maintenu. Dans la région 1002, le potentiel Vα croît avec le rapport cyclique α. En moyennant les valeurs du potentiel Vα sur plusieurs alternances, on peut ajuster le rapport cyclique α comme exposé en relation avec la figure 4 pour se rapprocher d'un point 1004 de commutation au zéro de tension. Le point 1004 correspond à une valeur du rapport cyclique α pour laquelle le transistor 114 est fermé à l'instant t_close lorsque la tension Vds est nulle.

Le graphique 1000 comporte en outre une deuxième région 1006 dans laquelle le rapport cyclique α est compris entre environ 0,30 et environ 0,35. La deuxième région 1006 correspond au mode de fonctionnement en commutation brutale, que le convertisseur 400 est empêché d'atteindre grâce à l'asservissement décrit précédemment.

Bien que cela n'ait pas été représenté en figure 10, les variantes du convertisseur 400 exposées en relation avec les figures 5, 6 et 7 ainsi que le convertisseur 800 des figures 8 et 9 présentent par exemple des variations de potentiel Vα, en fonction du rapport cyclique α, analogues à ce qui est illustré en figure 10 pour le convertisseur 400 de la figure 4, à un décalage vertical près.

La figure 11 est un graphique 1100 de variation d'un rendement η (en pourcent, %) des convertisseurs 100 et 400 des figures 1 et 4 en fonction de l'inductance Lf (en nanohenry, nH) de l'élément inductif 108 de ces convertisseurs.

La figure 11 comprend plus précisément une première courbe 1102 illustrant la variation du rendement η du convertisseur 100 et une deuxième courbe 1104 illustrant la variation du rendement η du convertisseur 400. En figure 11, on constate que le rendement η du convertisseur 400 est sensiblement toujours supérieur au rendement η du convertisseur 100. En particulier, lorsque l'inductance Lf est égale à environ 500 nH, le rendement η du convertisseur 400 est égal à environ 96,5 % contre 92 % pour le convertisseur 100.

Bien que cela n'ait pas été représenté en figure 11, les variantes du convertisseur 400 exposées en relation avec les figures 6 et 7 ainsi que le convertisseur 800 des figures 8 et 9 présentent des variations de rendement η, en fonction de l'inductance Lf, analogues à la courbe 1104.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que l'on ait exposé ci-dessus des exemples d'application à des convertisseurs à résonateur piézoélectrique, les modes de réalisation décrits ne se limitent pas à ce type de convertisseur, et la personne du métier est notamment capable d'adapter les modes de réalisation décrits à des convertisseurs de classe E, E2, phi2, etc.

Enfin, la mise en œuvre pratique des modes de réalisation et variantes décrits est à la portée de la personne du métier à partir des indications fonctionnelles données ci-dessus. En particulier, le choix des valeurs des inductances Lf et Ls, des résistances R1 et R2, des capacités C1, C2 et Cs, etc. est à la portée de la personne du métier.

## Revendications

1. Convertisseur (400 ; 800) de puissance comportant :
- un commutateur (114 ; 802) comprenant des première (114d ; 802d) et deuxième (114s ; 802s) bornes de conduction destinées à recevoir une première tension (Vds) alternative ;
- un premier circuit (402) de détection d'une valeur minimale atteinte par la première tension à chaque alternance, et de moyennage de valeurs minimales sur plusieurs alternances ; et
- un deuxième circuit (404) de commande du commutateur configuré, en fonction de la moyenne desdites valeurs, pour fermer le commutateur lorsque la première tension est sensiblement nulle.

2. Convertisseur selon la revendication 1, dans lequel le premier circuit (402) présente une constante (τ) de temps au moins cinq fois supérieure, de préférence au moins dix fois supérieure, à une période de la première tension (Vds).

3. Convertisseur selon la revendication 1 ou 2, dans lequel le premier circuit (402) comprend, entre un premier nœud (110) relié, de préférence connecté, à la première borne (114d ; 802d) de conduction du commutateur (114 ; 802) et un deuxième nœud (104 ; 604) d'application d'un potentiel de référence, un élément (406 ; 602) de redressement monoalternance en série avec une association en parallèle d'un élément (412) capacitif et d'une résistance (410).

4. Convertisseur selon la revendication 3, dans lequel un troisième nœud (408), situé entre l'élément (406 ; 602) de redressement monoalternance et l'association en parallèle de l'élément (412) capacitif et de la résistance (410), présente un potentiel (Vα) fonction d'une enveloppe inférieure de la première tension (Vds).

5. Convertisseur selon la revendication 3 ou 4, dans lequel l'élément (406) de redressement monoalternance est une diode.

6. Convertisseur selon l'une quelconque des revendications 3 à 5, dans lequel le premier circuit (402) comprend en outre une source (502) de tension (Vpol) reliée, de préférence connectée, entre l'association en parallèle de l'élément (412) capacitif et de la résistance (410) et le deuxième nœud (104 ; 604).

7. Convertisseur selon l'une quelconque des revendications 1 à 6, dans lequel le deuxième circuit (404) est en outre configuré pour modifier un rapport cyclique (α) du commutateur (114 ; 802) en fonction de la moyenne desdites valeurs.

8. Convertisseur selon l'une quelconque des revendications 1 à 7, dans lequel le commutateur (114 ; 802) est un transistor à effet de champ, les première (114d ; 802d) et deuxième (114s ; 802s) bornes correspondant respectivement à des bornes de drain et de source du transistor.

9. Convertisseur selon l'une quelconque des revendications 1 à 8, dans lequel le commutateur (114 ; 802) présente une fréquence de commutation comprise entre 0,1 MHz et 100 MHz, de préférence comprise entre 1 et 10 MHz, plus préférentiellement égale à environ 1,5 MHz.

10. Convertisseur selon l'une quelconque des revendications 1 à 9, comportant en outre un résonateur piézoélectrique (112) adapté à fournir la première tension (Vds).

11. Convertisseur selon l'une quelconque des revendications 1 à 10, dans lequel le deuxième circuit (404) comprend :
- un comparateur (414) de la moyenne desdites valeurs à un seuil (Vref) ;
- un correcteur (416) ; et
- un circuit (418) de modulation de largeur d'impulsion.

12. Convertisseur selon la revendication 11, dans lequel le seuil (Vref) est fonction d'une consommation énergétique d'une charge (124) alimentée par le convertisseur (400 ; 800) .

13. Procédé de commande d'un convertisseur de puissance selon l'une quelconque des revendications 1 à 12, comprenant les étapes suivantes :
a) moyenner les valeurs minimales de la première tension (Vds) alternative après plusieurs alternances ; et
b) ajuster un instant (t_close) de fermeture du commutateur (114 ; 802) en fonction de la moyenne desdites valeurs.
